# NEUE EUROPÄISCHE PATENTSCHRIFT

(11) **EP 2 692 524 B2**
(45) Veröffentlichungstag und Bekanntmachung des Hinweises auf die Entscheidung über den Einspruch: **19.01.2022**
(45) Hinweis auf die Patenterteilung: 08.10.2014
(21) Anmeldenummer: 13186323.5
(22) Anmeldetag: 18.01.2008
(51) Int. Cl.: B32B 15/01, C22C 21/00, F28D 1/00, B22D 1/00, C23C 4/04

(54) **Verbundwerkstoff mit Korrosionsschutzschicht und Verfahren zu dessen Herstellung**
Composite material with a protective layer against corrosion and method for its manufacture
Matériau composite doté d'une couche de protection contre la corrosion et son procédé de fabrication

(43) Veröffentlichungstag der Anmeldung: 05.02.2014
(62) Teilanmeldung aus: 08100655.3
(73) Patentinhaber: Speira GmbH, 41515 Grevenbroich (DE)
(72) Erfinder: Mrotzek, Manfred, 21614 Buxtehude (DE); Sicking, Raimund, 47506 Neukirchen-Vluyn (DE)
(74) Vertreter: Cohausz & Florack

(56) Entgegenhaltungen:
- EP-A- 1 075 935
- EP-A1- 1 730 320
- GB-A- 1 486 030
- JP-A- 2 243 734
- US-A1- 2004 028 940
- US-A1- 2007 122 648

## Beschreibung

Die Erfindung betrifft einen Verbundwerkstoff aufweisend ein Trägermaterial, wobei das Trägermaterial zumindest teilflächig mit einer Korrosionsschutzschicht aus einer Aluminiumlegierung beschichtet ist und wobei das Trägermaterial aus einer Al-Mn-Cu-Legierung ausgebildet ist. Ferner betrifft die Erfindung ein Verfahren zur Herstellung eines solchen Verbundwerkstoffs sowie die Verwendung eines solchen Verbundwerkstoffs für kühlmittelführende Komponenten von Wärmeübertragern oder Wärmetauschern, insbesondere Rohre.

Verbundwerkstoffe der eingangs genannten Art sind bereits bekannt und werden beispielsweise für Komponenten von Wärmeübertragern oder Wärmetauschern in Flugzeugen oder Kraftfahrzeugen eingesetzt. So können Trägermaterialien aus einer korrosionsempfindlichen Aluminiumlegierung bekanntermaßen mit Legierungen, die mindestens ein korrosionspotentialsenkendes Element, beispielsweise Zink, Zinn oder Indium, aufweisen, beschichtet werden. Häufig werden diese einer Wärmebehandlung bei Temperaturen von oberhalb 450°C, vorzugsweise 575°C bis 610°C, unterzogen, so beispielsweise beim Löten der Wärmetauscher. Die Verwendung von Zink als korrosionspotentialsenkendem Element ist allerdings mit dem Problem behaftet, dass Zink zügig und kaum kontrollierbar von der Korrosionsschutzschicht in das Trägermaterial diffundieren kann. Dies führt dazu, dass auch das Trägermaterial unedler und korrosionsanfälliger wird. Ferner erfahren zinkhaltige Korrosionsschutzschichten durch korrosive Medien einen raschen Materialabtrag, da Angriffstiefe und Materialabtrag durch korrosive Medien nicht steuerbar sind. Der durch Zink bewirkte Korrosionsschutz ist daher von vergleichsweise kurzer Dauer. Die Verwendung von Zinn und/oder Indium als korrosionspotentialsenkendem Element ist dagegen insofern problematisch, als ihr Vorhandensein die Recyclingfähigkeit der Legierungen stark beeinträchtigt. Denn Anteile von Zinn oder Indium an Aluminiumlegierungen sind nur für wenige Anwendungen geeignet. Die Zinn- und/oder Indiumanteile müssten demnach erst aufwändig ausgesondert werden, um Aluminium hoher Reinheit, das für vielfältige Anwendungen geeignet ist, wiedergewinnen zu können.

Weiterhin ist es bekannt, ein Trägermaterial aus einer Aluminium-Mangan-Legierung mit einer Schicht aus einer Aluminium-Silizium-Legierung zu beschichten. Bei diesem Verbundwerkstoff diffundiert bei Temperaturen von vorzugsweise 575°C bis 610° Silizium, das von der aufgebrachten Schicht aus einer Aluminium-Silizium-Legierung in das Trägermaterial und ruft Ausscheidungen von Manganverbindungen in den manganübersättigten Mischkristallen des Trägermaterials hervor. Das Korrosionspotential der ausgeschiedenen Manganverbindungen ist niedriger als das Korrosionspotential des restlichen Trägermaterials, weshalb die ausgeschiedenen Manganverbindungen als Korrosionsschutz wirken können. Allerdings hängen die Tiefe, bis zu der das Silizium in das Trägermaterial diffundiert, und somit die Dicke der die ausgeschiedenen Manganverbindungen aufweisenden Schicht empfindlich von der Prozessführung bei der Herstellung des Verbundwerkstoffs und von der Wärmebehandlung ab. Dies erfordert eine hohe Präzision als auch aufwändige Prozessüberwachungstechniken bei der Herstellung. Ein korrosionsbeständiger Verbundwerkstoff umfassend ein Trägermaterial aus einer Al-Mg-Mn-Legierung und einer Korrosionsschutzschicht ist aus der GB 1 486 030 bekannt.

Der vorliegenden Erfindung liegt daher die Aufgabe zu Grunde, einen Verbundwerkstoff der eingangsgenannten Art anzugeben, welcher einen definierten, wirksamen und beständigen Korrosionsschutz gewährt und zugleich ein hohes Recyclingpotential aufweist. Die vorliegende Erfindung hat darüber hinaus die Aufgabe, ein Verfahren zur Herstellung eines solchen Verbundwerkstoffs anzugeben. Die Aufgabe wird mit einem Verbundwerkstoff gemäß Patentanspruch 1, einem Verfahren zu dessen Herstellung nach Patentanspruch 7 sowie einem Warmetauscher nach Patentanspruch 11 gelost.

Gemäß der vorliegenden Erfindung weist die Aluminiumlegierung der Korrosionsschutzschicht folgende Zusammensetzung in Gew.-% auf:

| | | | | |
|---|---|---|---|---|
| 0,8 | ≤ | Mn | ≤ | 1,8, |
| | | Zn | ≤ | 0,05, |
| | | Cu | ≤ | 0,05, |
| 0,4 | ≤ | Si | ≤ | 1,0, |
| | | Cr | ≤ | 0,25, |
| | | Zr | ≤ | 0,25, |
| | | Mg | ≤ | 0,10, |

Rest Aluminium und unvermeidliche Verunreinigungen, einzeln maximal 0,05 Gew.-%, in Summe maximal 0,15 Gew.-%, wobei der Siliziumgehalt des Trägermaterials höchstens 0,4 Gew.-% beträgt und wobei ein Konzentrationsgradient vorliegt, so dass eine wohldefinierte Siliziumdiffusion von der Korrosionsschutzschicht in das Trägermaterial stattfindet.

Es wurde überraschenderweise festgestellt, dass der Mangangehalt zwischen 0,8 Gew.-% und 1,8 Gew.-% an der als Korrosionsschutzschicht vorgesehenen Legierung eine hohe Dichte von fein verteilten manganhaltigen Ausscheidungen ermöglicht. Auf diese Weise wird das Korrosionspotential der Korrosionsschutzschicht erniedrigt. Vorzugsweise liegt das Korrosionspotential der Korrosionsschutzschicht etwa 30 mV niedriger als das Korrosionspotential des Trägermaterials. Ferner soll der Anteil an Kupfer und Zink jeweils höchstens 0,05 Gew.-% betragen. Durch die niedrigen Anteile an Kupfer und Zink kann die Bildung von Lokalelementen, welche eine galvanisch sehr aktive Oberfläche und damit einen erhöhten korrosionsbedingten Materialabtrag zur Folge haben, gehemmt werden. Die Korrosionsbeständigkeit der Korrosionsschutzschicht wird dadurch gesteigert. Ferner wird die Recyclingfähigkeit des Verbundwerkstoffs und der daraus hergestellten Erzeugnisse durch die niedrigen Kupfer- und Zinkanteile sowie durch die Begrenzung des Silizium-, Chrom- und Zirkonium-Gehalts an der Legierung positiv beeinflusst. Der Anteil an Magnesium sollte höchsten 0,10 Gew.-% betragen, damit gegebenenfalls die Lötbarkeit eines aus der Legierung bestehenden Werkstücks bei Verwendung eines Si-haltigen Aluminiumlots nichtdurch eine Magnesium-Verunreinigung des Flussmittels beeinträchtigt wird. Durch die vorstehend genannte Aluminiumlegierung bietet die Korrosionsschutzschicht nur wenig Angriffsfläche für interkristalline Korrosion oder Lochfraß auch nach einer Wärmebehandlung. Der korrosionsbedingte Materialabtrag kann somit gering gehalten werden. Vielmehr manifestiert sich Korrosion an dem Verbundwerkstoff, wenn überhaupt, in einem schwach ausgeprägten muldenförmigen Angriff, bei dem der mittlere Durchmesser größer als die mittlere Tiefe der Mulde ist. Durch die geringe mittlere Tiefe kann die Wahrscheinlichkeit eines Vordringens von Korrosionsangriffen in korrosionsempfindliche Bereiche des Trägermaterials verringert werden. Vorzugsweise ist die Korrosionsschutz-schicht ein- oder beidseitig auf das Trägermaterial aufgebracht.

In einer bevorzugten Ausgestaltung des Verbundwerkstoffs beträgt der Mangangehalt der Aluminiumlegierung der Korrosionsschutzschicht 1,0 Gew.-% bis 1,8 Gew.-%, vorzugsweise 1,2 Gew.-% bis 1,8 Gew.-%. Durch die leichte Erhöhung des Mangananteils an der Aluminiumlegierung der Korrosionsschutzschicht kann die Bildung fein verteilter manganhaltiger Ausscheidungen, die für den Korrosionsschutz bedeutsam sind, noch etwas gefördert werden. Oberhalb von 1,8 Gew.-% jedoch können sich im Gefüge der Korrosionsschutzschicht auf Grund der beschränkten Löslichkeit des Mangans grobe Manganausscheidungen bilden. Diese groben Ausscheidungen können grundsätzlich zu einer verminderten Korrosionsbeständigkeit der Korrosionsschutzschicht führen.

Weiterhin weist die Aluminiumlegierung der Korrosionsschutzschicht 0,4 Gew.-% bis 1,0 Gew.-% Silizium auf. Teile des in der Korrosionsschutzschicht vorhandenen Siliziums können in das Trägermaterial diffundieren und dort zusätzliche fein verteilte manganhaltige Ausscheidungen, die die Korrosionsbeständigkeit des Trägermaterials fördern, hervorrufen. Das Ausmaß der Diffusion des Siliziums von der Korrosionsschutzschicht in das Trägermaterial hängt insbesondere wegen des definierten Siliziumanteils an der Korrosionsschutzschicht lediglich von dem Siliziumgehalt des Trägermaterials, und somit von dem Konzentrationsgradienten des Siliziums ab, ab. Besonders wenn der Siliziumgehalt des Trägermaterials höchstens 0,4 Gew.-% beträgt, kann somit eine wohldefinierte Siliziumdiffusion von der Korrosionsschutzschicht in das Trägermaterial hervorgerufen werden. Ferner können Schichten mit grundsätzlich beliebigem Siliziumanteil, beispielsweise ALSi-Lote, zusätzlich auf der dem Trägermaterial abgewandten Seite der Korrosionsschutzschicht aufgebracht werden. Durch den definierten Siliziumgehalt der Korrosionsschutzschicht wird eine, gegebenenfalls schwer kontrollierbare, Siliziumdiffusion von der zusätzlichen äußeren Schicht durch die Korrosionsschutzschicht in das Trägermaterial hinein gehemmt. Die Stabilität der Eigenschaften des Verbundwerkstoffs kann somit besser gewährleistet werden.

In einer weiteren bevorzugten Ausgestaltung des Verbundwerkstoffs weist die Aluminiumlegierung der Korrosionsschutzschicht 0,05 Gew.-% bis 0,25 Gew.-% Chrom und/oder 0,05 Gew.-% bis 0,25 Gew.-% Zirkonium auf. Entsprechende Chrom- und/oder Zirkoniumanteile vergrößern insbesondere die mittlere Korngröße des Gefüges der Korrosionsschutzschicht. Dadurch lässt sich die Tiefe, bis zu der Silizium von einer zusätzlichen siliziumhaltigen äußeren Schicht in die Korrosionsschutzschicht diffundiert, steuern. Oberhalb eines Chromgehaltes bzw. Zirkoniumgehaltes von 0,25 Gew.-% allerdings können grobe Primärausscheidungen entstehen, welche wiederum das Gefüge der Korrosionsschutzschicht negativ beeinflussen.

Ferner ist das Trägermaterial aus einer Al-Mn-Cu-Legierung ausgebildet. Aluminium oder Aluminiumlegierungen weisen insbesondere vorteilhafte Umformeigenschaften auf, so dass der Verbundwerkstoff zu Komponenten für vielfältige Einsatzzwecke umgeformt werden kann. Weiterhin haben Aluminium oder Aluminiumlegierungen Gewichtsvorteile insbesondere im Vergleich zu vielen anderen Metallen oder Metalllegierungen wie Stahl, was sich besonders vorteilhaft auswirkt, wenn aus Aluminium oder Aluminiumlegierungen bestehende Komponenten für gewichtssensitive Anwendungen, zum Beispiel in Flugzeugen oder Kraftfahrzeugen, vorgesehen sind. Erfindungsgemäß ist das Trägermaterial aus einer Al-Mn-Cu-Legierung ausgebildet. Solche Legierungen sind als Trägermaterial von Verbundwerkstoffen bevorzugt, die in Wärmetauschern verwendet werden.

In einer weiteren bevorzugten Ausgestaltung des Verbundwerkstoffs ist das Trägermaterial vollflächig mit der Korrosionsschutzschicht beschichtet. Dies ist insbesondere dann vorteilhaft, wenn der Verbundwerkstoff für vielfältige, unterschiedliche Anwendungen geeignet sein soll. Es ist aber auch möglich, das Trägermaterial nur teilflächig mit der Korrosionsschutzschicht zu beschichten. Beispielsweise könnte es ausreichend sein, nur die Teilflächen des Verbundwerkstoffs, die nach Fertigung eines aus dem Verbundwerkstoff gebildeten Formteils mit einer korrosiven Umgebung in Kontakt kommen, mit der Korrosionsschutzschicht zu beschichten. Somit kann der Herstellungsaufwand an die von dem hergestellten Formteil zu erfüllenden Anforderungen besser angepasst werden.

Weiterhin ist erfindungsgemäß die Korrosionsschutzschicht auf ihrer dem Trägermaterial abgewandten Seite zumindest teilflächig mit einer Außenschicht beschichtet, wobei die Außenschicht aus einer Al-Si-Legierung ausgebildet ist. Ferner kann das Trägermaterial auf seiner der Korrosionsschutz-schicht abgewandten Seite mit mindestens einer Außenschicht beschichtet sein. Letztere Außenschicht kann aus Aluminium oder einer anderen Aluminiumlegierung, insbesondere aus einer Al-Si-Legierung, bestehen. Dadurch besteht die Möglichkeit, den Verbundwerkstoff mit noch weiteren funktionellen Schichten auszustatten, beispielsweise eine Lötfähigkeit von beiden Seiten des Trägermaterials her zu erreichen. In diesem Fall kann es vorteilhaft sein, wenn das Trägermaterial beidseitig mit der Korrosionsschutzschicht beschichtet ist.

Gemäß einer weiteren Lehre der vorliegenden Erfindung wird der Verbundwerkstoff durch ein Verfahren hergestellt, bei dem ein Trägermaterial zumindest teilflächig mit einer Korrosionsschutzschicht aus einer wie zuvor beschriebenen Aluminiumlegierung beschichtet wird, wobei die Korrosionsschutzschicht durch Simultangießen, Plattieren oder Sprühen aufgebracht wird.

Durch die Verwendung des Plattierens können auf wirtschaftliche Weise große Mengen des Verbundwerkstoffs mit einer wohldefinierten Dicke der Korrosionsschutzschicht erzeugt werden, wobei durch das Plattieren eine besonders gute Verbindung zwischen dem Trägermaterial und der Korrosionsschutzschicht erzielt wird. Der Sprühauftrag der Korrosionsschutzschicht kann darüber hinaus gewährleisten, dass die Korrosionsschutzschicht gleichmäßig, in definierter Weise und insbesondere mit räumlich hoher Auflösung auf das Trägermaterial aufgebracht wird. Das Sprühen ist daher speziell zur Auftragung einer teilflächig auf dem Trägermaterial angeordneten Korrosionsschutzschicht bevorzugt. Simultanes Gießen der Korrosionsschutzschicht mit dem Trägermaterial wiederum führt zu einer Reduzierung der Anzahl an Arbeitschritten zur Herstellung der Korrosionsschutzschicht auf dem Trägermaterial. Ein separates Plattieren oder ein separater Sprühauftrag der Aluminiumlegierung für eine Korrosionsschutzschicht auf das Trägermaterial ist dann nicht mehr erforderlich. Denkbar ist aber auch eine Kombination von Plattieren, Sprühauftrag und/oder Simultangießen, beispielsweise dann, wenn weitere funktionelle Schichten, beispielsweise Außenschichten, benötigt werden.

Ferner können Außenschichten mittels eines Simultangießverfahrens, Plattierverfahrens oder Sprühverfahrens, beispielsweise auf die Korrosionsschutzschicht aber auch auf das Trägermaterial aufgebracht werden.

Hinsichtlich weiterer Vorteile des erfindungsgemäßen Verfahrens wird auf die Ausführungen zum erfindungsgemäßen Verbundwerkstoff verwiesen.

Gemäß einer weiteren Lehre der vorliegenden Erfindung wird die Aufgabe durch einen Wärmetauscher gelöst umfassend mindestens eine Komponente, insbesondere eine kühlmittelführende Komponente, bestehend aus einem erfindungsgemäßen Verbundwerkstoff gelöst. Der Wärmetauscher ist einerseits beständig gegen Korrosion und kann gleichzeitig gut recycelt werden.

Die Verwendung des erfindungsgemäßen Verbundwerkstoffs für kühlmittelführende Komponenten in Wärmeübertragern oder Wärmetauschern ist insbesondere vorteilhaft, weil derartige Komponenten aus Gründen der Gewichtsminimierung häufig nur geringe Wandstärken aufweisen dürfen. Werden Korrosionsangriffe an diesen Komponenten mit geringen Wandstärken durch eine Korrosionsschutzschicht jedoch nicht hinreichend gehemmt, kann die Dichtheit der kühlmittelführenden Komponenten durch in die Tiefe gehende Angriffe wie interkristalline Korrosion oder Lochfraß geschädigt werden. Durch die Wirkung der erfindungsgemäßen Korrosionsschutzschicht hingegen manifestiert sich Korrosion an den kühlmittelführenden Komponenten, wenn überhaupt, in einem schwach ausgeprägten muldenförmigen Angriff, bei dem der mittlere Durchmesser größer als die mittlere Tiefe der Mulde ist. Die Dichtheit der kühlmittelführenden Komponenten ist somit weniger gefährdet.

Es gibt nun eine Vielzahl von Möglichkeiten, den erfindungsgemäßen Verbundwerkstoff oder das Verfahren zu dessen Herstellung sowie daraus hergestellte Wärmetauscher auszugestalten und weiterzubilden. Hierzu wird verwiesen einerseits auf die den Patentansprüchen 1 und 7 hachgeordneten Patentansprüche, andererseits auf die Beschreibung von Ausführungsbeispielen in Verbindung mit der Zeichnung. Die Zeichnung zeigt in
Fig. 1 eine schematische Schnittansicht durch ein erstes Ausführungsbeispiel eines erfindungsgemäßen Verbundwerkstoffs und
Fig. 2 eine schematische Schnittansicht einer kühlmittelführenden Komponente eines Ausführungsbeispiels eines
   erfindungsgemäßen Wärmetauschers in Form eines Rohres.

Fig. 1 zeigt in einer schematischen Schnittansicht ein Ausführungsbeispiel eines erfindungsgemäßen Verbundwerkstoffs 1. Der Verbundwerkstoff 1 weist eine Korrosionsschutzschicht 2, ein Trägermaterial 3 aus einer Aluminium-Mangan-Kupfer-Legierung, und eine zusätzliche Außenschicht 4 eine Schicht aus einer Aluminium-Silizium-Legierung, auf. Die Korrosionsschutzschicht 2 besteht aus einer Aluminiumlegierung mit folgenden Legierungsbestandteilen in Gew.-%:

| | | | | |
|---|---|---|---|---|
| 0,8 | ≤ | Mn | ≤ | 1,8, |
| | | Zn | ≤ | 0,05, |
| | | Cu | ≤ | 0,05, |
| 0,4 | ≤ | Si | ≤ | 1,0, |
| | | Cr | ≤ | 0,25, |
| | | Zr | ≤ | 0,25, |
| | | Mg | ≤ | 0,10, |

Rest Aluminium und unvermeidliche Verunreinigungen, einzeln maximal 0,05 Gew.-%, in Summe maximal 0,15 Gew.-%, wobei der Siliziumgehalt des Trägermaterials höchstens 0,4 Gew.-% beträgt und wobei ein Konzentrationsgradient vorliegt, so dass eine wohldefinierte Siliziumdiffusion von der Korrosionsschutzschicht in das Trägermaterial stattfindet.

Der Mangananteil kann gegebenenfalls auch aus dem Intervall von 1,0 Gew.-% bis 1,8 Gew.-%, insbesondere auch von 1,2 Gew.-% bis 1,8 Gew.-%, gewählt werden. Optional können auch noch ein Chrom- und/oder Zirkoniumgehalt von jeweils 0,05 Gew.-% bis 0,25 Gew.-% in der Aluminiumlegierung der Korrosionsschutzschicht 2 vorgesehen sein. Die Aluminiumlegierung der Korrosionsschutzschicht 2 weist 0,4 Gew.-% bis 1,0 Gew.-% Silizium auf. Die Korrosions-schutzschicht 2 zeigt ein gutes Korrosionsschutzverhalten bei Kontakt mit korrosiven Medien. Insbesondere zeigt sich Korrosion an den durch die Korrosionsschutzschicht geschützten Bereichen des Verbundwerkstoffs 1 lediglich, wenn überhaupt, in einem schwach ausgeprägten muldenförmigen Angriff, bei dem der mittlere Durchmesser größer als die mittlere Tiefe der Mulde ist. Verbundwerkstoffe 1 und daraus hergestellte kühlmittelführende Komponenten für Wärmeübertrager oder Wärmetauscher sowie bei der Produktion anfallende Ausschussmaterialien können sehr gut recycelt werden, da die Legierungszusammensetzung weder Zink, noch Zinn oder Indium umfasst.

In dem in Fig. 1 dargestellten Ausführungsbeispiel ist das Trägermaterial 3 lediglich einseitig mit der Korrosionsschutzschicht 2 und einer Außenschicht 4 beschichtet. Es ist jedoch auch möglich, das Trägermaterial 3 beidseitig mit einer Korrosionsschutzschicht und gegebenenfalls einer weiteren Außenschicht zu beschichten. Eine teilflächige Beschichtung, wobei beispielsweise nur die mit einem korrosiven Medium in Kontakt stehenden Bereiche beschichtet sind, ist ebenfalls denkbar. Ferner kann auch die der Korrosionsschutzschicht 2 abgewandte Seite des Trägermaterials 3 mit mindestens einer Außenschicht 4 versehen sein, wenn dies zweckdienlich ist.

In Fig. 2 ist ein aus dem Verbundwerkstoff 1 hergestelltes Rohr 5 in einer schematischen Querschnittsansicht dargestellt. Der Verbundwerkstoff 1 kann aber, abgesehen von Rohren 5, grundsätzlich auch zur Fertigung beliebiger anderer Komponenten verwendet werden. Die Korrosionsschutzschicht 2 sowie die Außenschicht 4 aus einer Aluminium-Silizium-Legierung, die in diesem Beispiel auf der dem Rohrinnern zugewandten Seite des Trägermaterials 3 angeordnet ist, werden üblicherweise durch Plattieren mit dem Trägermaterial 3 aus einer Aluminium-Mangan-Kupfer-Legierung verbunden. Im Inneren des Rohres 5 kann beispielsweise ein Kühlmedium geführt werden, wobei die Korrosionsschutz-schicht 2 das Trägermaterial 3 vor Korrosion schützt.

Statt des zuvor genannten Plattierens der Korrosionsschutzschicht 2 und der Außenschicht 4 auf das Trägermaterial 3 ist es auch möglich, das Trägermaterial 3, die Korrosionsschutzschicht 2 und/oder die Außenschicht 4 simultan zu einem entsprechenden Verbundwerkstoff zu gießen und in nachfolgenden Arbeitsschritten zu einem Rohr 5 umzuformen. Eine weitere alternative Herstellungsweise ist, die Korrosionsschutzschicht 2 und/oder die Außenschicht 4 mittels Sprühens auf das Trägermaterial 3 aufzubringen. Es ist natürlich auch eine beliebige Kombination der zuvor genannten Verfahren denkbar.

Das in Fig. 2 gezeigte Rohr 5 weist in diesem Beispiel einen runden Querschnitt auf. Es ist aber auch möglich, Rohre 5 mit beliebig andersartigen, beispielsweise ellipsenförmigen, rechteckigen, polygonalen, sich verjüngenden oder ähnlichen Querschnitten aus dem Verbundwerkstoff zu fertigen. Schließlich sind noch viele andere Ausgestaltungen des Rohrs 5 mit Korrosionsschutzschicht 2 und Außenschicht 4 denkbar. So kann das Trägermaterial 3 zusätzlich oder alternativ zu dem in Fig. 2 dargestellten Beispiel auf der äußeren Umfangsfläche eine Korrosionsschutzschicht 2 und optional eine Außenschicht 4 aufweisen.

## Patentansprüche

1. Verbundwerkstoff (1),
aufweisend ein Trägermaterial (3),
wobei das Trägermaterial (3) zumindest teilflächig mit einer Korrosionsschutzschicht (2) aus einer Aluminiumlegierung beschichtet ist und wobei das Trägermaterial aus einer Al-Mn-Cu-Legierung ausgebildet ist,
**dadurch gekennzeichnet, dass**
die Aluminiumlegierung der Korrosionsschutzschicht (2) folgende Zusammensetzung in Gew.-% aufweist:
| | | | | |
|---|---|---|---|---|
| 0,8 | ≤ | Mn | ≤ | 1,8, |
| | | Zn | ≤ | 0,05, |
| | | Cu | ≤ | 0,05, |
| 0,4 | ≤ | Si | ≤ | 1,0, |
| | | Cr | ≤ | 0,25, |
| | | Zr | ≤ | 0,25, |
| | | Mg | ≤ | 0,10, |
Rest Aluminium und unvermeidliche Verunreinigungen, einzeln maximal 0,05 Gew.-%, in Summe maximal 0,15 Gew.-%, wobei der Siliziumgehalt des Trägermaterials höchstens 0,4 Gew.-% beträgt und wobei ein Konzentrationsgradient vorliegt, so dass eine wohldefinierte Siliziumdiffusion von der Korrosionsschutzschicht in das Trägermaterial stattfindet, die Korrosionsschutzschicht (2) auf ihrer dem Trägermaterial (3) abgewandten Seite zumindest teilflächig mit einer Außenschicht (4) beschichtet ist und die Außenschicht (4) aus einer Al-Si-Legierung ausgebildet ist.

2. Verbundwerkstoff nach Anspruch 1,
**dadurch gekennzeichnet, dass**
der Mn-Gehalt der Aluminiumlegierung der Korrosionsschutzschicht (2) 1,0 bis 1,8 Gew.-%, vorzugsweise 1,2 bis 1,8 Gew.-%, beträgt.

3. Verbundwerkstoff nach Anspruch 1 oder 2,
**dadurch gekennzeichnet, dass**
die Aluminiumlegierung der Korrosionsschutzschicht (2) zusätzlich 0,05 bis 0,25 Gew.-% Chrom und/oder 0,05 Gew.-% bis 0,25 Gew.-% Zirkonium aufweist.

4. Verbundwerkstoff nach einem der Ansprüche 1 bis 3,
**dadurch gekennzeichnet, dass**
das Trägermaterial (3) vollflächig mit der Korrosionsschutzschicht (2) beschichtet ist.

5. Verbundwerkstoff nach einem der Ansprüche 1 bis 4,
**dadurch gekennzeichnet, dass**
das Trägermaterial (3) auf seiner der Korrosionsschutzschicht (2) abgewandten Seite mit mindestens einer Außenschicht beschichtet ist.

6. Verbundwerkstoff nach Anspruch 5,
**dadurch gekennzeichnet, dass**
die Außenschicht aus Aluminium oder einer Aluminiumlegierung, insbesondere aus einer Al-Si-Legierung, ausgebildet ist.

7. Verfahren zur Herstellung eines Verbundwerkstoffs nach einem der Ansprüche 1 bis 6,
bei welchem ein Trägermaterial zumindest teilflächig mit einer Korrosionsschutzschicht aus einer Aluminiumlegierung beschichtet wird, wobei die Korrosionsschutzschicht durch Simultangießen, Plattieren oder Sprühen aufgebracht wird und
bei welchem die Korrosionsschutzschicht auf ihrer dem Trägermaterial abgewandten Seite zumindest teilflächig mit einer Außenschicht beschichtet wird,
wobei die Außenschicht aus einer Al-Si-Legierung ausgebildet ist.

8. Verfahren nach Anspruch 7,
**dadurch gekennzeichnet, dass**
das Trägermaterial vollflächig mit der Korrosionsschutzschicht beschichtet wird.

9. Verfahren nach Anspruch 7 oder 8,
**dadurch gekennzeichnet, dass**
das Trägermaterial auf seiner der Korrosionsschutzschicht abgewandten Seite mit mindestens einer Außenschicht beschichtet wird.

10. Verfahren nach Anspruch 7 oder 9,
**dadurch gekennzeichnet, dass**
die Außenschicht mittels eines Simultangießverfahrens, Plattierverfahrens oder Sprühverfahrens aufgebracht wird.

11. Wärmetauscher umfassend mindestens eine Komponente, insbesondere eine kühlmittelführende Komponente, bestehend aus einem Verbundwerkstoff nach einem der Ansprüche 1 bis 6.

## Claims

1. Composite material (1), having a carrier material (3),
wherein the carrier material (3) is coated, at least over part of the surface, with a corrosion protection layer (2) made of an aluminium alloy and wherein the carrier material (3) is formed from an Al-Mn-Cu alloy,
**characterised in that** the aluminium alloy of the corrosion protection layer (2) has the following composition in % by weight:
| | | | | |
|---|---|---|---|---|
| 0.8 | ≤ | Mn | ≤ | 1.8 |
| | | Zn | ≤ | 0.05 |
| | | Cu | ≤ | 0.05 |
| 0.4 | ≤ | Si | ≤ | 1.0 |
| | | Cr | ≤ | 0.25 |
| | | Zr | ≤ | 0.25 |
| | | Mg | ≤ | 0.10 |
remainder aluminium and unavoidable impurities, individually a maximum of 0.05 % by weight, in total a maximum of 0.15 % by weight, wherein the silicon content of the carrier material is 0.4 % by weight as maximum and wherein a concentration gradient is present, so that a well-defined silicon diffusion takes place from the corrosion protection layer into the carrier material, the corrosion protection layer (2) is coated, on its side remote from the carrier material (3), at least over part of the surface, with an outer layer (4) and the outer layer (4) is formed from an Al-Si alloy.

2. Composite material according to claim 1, **characterised in that** the Mn content of the aluminium alloy of the corrosion protection layer (2) is 1.0 to 1.8 % by weight, preferably 1.2 to 1.8 % by weight.

3. Composite material according to claim 1 or 2, **characterised in that** the aluminium alloy of the corrosion protection layer (2) additionally has 0.05 to 0.25 % by weight chromium and/or 0.05 % by weight to 0.25 % by weight zirconium.

4. Composite material according to any one of claims 1 to 3, **characterised in that** the carrier material (3) is coated over the entire surface with the corrosion protection layer (2).

5. Composite material according to any one of claims 1 to 4, **characterised in that** the carrier material (3) is coated, on its side remote from the corrosion protection layer (2), with at least one outer layer.

6. Composite material according to claim 5, **characterised in that** the outer layer is formed from aluminium or an aluminium alloy, in particular from an Al-Si alloy.

7. Method for producing a composite material according to any one of claims 1 to 6, in which a carrier material is coated, at least over part of the surface, with a corrosion protection layer made of an aluminium alloy, wherein the corrosion protection layer is applied by simultaneous casting, plating, or spraying and in which the corrosion protection layer is coated, on its side remote from the carrier material, at least over part of the surface, with an outer layer, wherein the outer layer is formed from an Al-Si alloy.

8. Method according to claim 7, **characterised in that** the carrier material is coated over the entire surface with the corrosion protection layer.

9. Method according to claim 7 or 8, **characterised in that** the carrier material, is coated, on its side remote from the corrosion protection layer, with at least one outer layer.

10. Method according to claim 7 or 9, **characterised in that** the outer layer is applied by means of a simultaneous casting method, plating method or spray method.

11. Heat exchanger comprising at least one component, in particular a coolant-guiding component, consisting of a composite material according to any one of claims 1 to 6.

## Revendications

1. Matériau composite (1), comportant une matière support (3), la matière support (3) étant revêtue au moins sur une surface partielle avec une couche anticorrosion (2) en un alliage d'aluminium et la matière support étant conçue en un alliage Al-Mn-Cu, **caractérisé en ce que** l'alliage d'aluminium de la couche anticorrosion (2) présente la composition suivante en % en poids :
| | | | | |
|---|---|---|---|---|
| 0,8 | ≤ | Mn | ≤ | 1,8, |
| | | Zn | ≤ | 0,05, |
| | | Cu | ≤ | 0,05, |
| 0.4 | ≤ | Si | ≤ | 1,0, |
| | | Cr | ≤ | 0,25, |
| | | Zr | ≤ | 0,25, |
| | | Mg | ≤ | 0,10, |
le reste d'aluminium et des impuretés inévitables, individuellement à raison d'un maximum de 0,05 % en poids, au total un maximum de 0,15 % en poids, la teneur en Si de la matière support étant 0.4 % en poids au maximum et un gradient de concentration étant présent, de sorte qu'une diffusion bien définie de silicium de la couche anticorrosion à la matière support a lieu, la couche anticorrosion (2) étant revêtue, sur sa face opposée à la matière support (3), au moins sur une surface partielle avec une couche extérieure (4), la couche extérieure (4) étant conçue en un alliage Al-Si.

2. Matériau composite selon la revendication 1, **caractérisé en ce que** la teneur en Mn de l'alliage d'aluminium de la couche anticorrosion (2) est de 1,0 à 1,8 % en poids, de préférence de 1,2 à 1,8 % en poids.

3. Matériau composite selon la revendication 1 ou 2, **caractérisé en ce que** l'alliage d'aluminium de la couche anticorrosion (2) comporte en supplément de 0,05 à 0,25 % de chrome et/ou 0,05 à 0,25 % de zirconium.

4. Matériau composite selon l'une quelconque des revendications 1 à 3, **caractérisé en ce que** la matière support (3) est revêtue à pleine surface avec la couche anticorrosion (2).

5. Matériau composite selon l'une quelconque des revendications 1 à 4, **caractérisé en ce que** la matière support (3) est revêtue, sur sa face opposée à la couche anticorrosion (2), avec au moins une couche extérieure.

6. Matériau composite selon la revendication 5, **caractérisé en ce que** la couche extérieure est conçue en aluminium ou en un alliage d'aluminium, particulièrement en un alliage Al-Si.

7. Procédé de fabrication d'un matériau composite selon l'une quelconque des revendications 1 à 6, lors duquel une matière support est revêtue au moins sur une surface partielle avec une couche anticorrosion en un alliage d'aluminium, la couche anticorrosion étant appliquée par coulée simultanée, par plaquage ou par pulvérisation, et lors duquel la couche anticorrosion est revêtue, sur sa face opposée à la matière support, au moins sur une surface partielle avec une couche extérieure, la couche extérieure étant conçue en un alliage Al-Si.

8. Procédé selon la revendication 7, **caractérisé en ce que** la matière support est revêtue à pleine surface avec la couche anticorrosion.

9. Procédé selon la revendication 7 ou 8, **caractérisé en ce que** la matière support est revêtue, sur sa face opposée à la couche anticorrosion, avec au moins une couche extérieure.

10. Procédé selon la revendication 7 ou 9, **caractérisé en ce que** la couche extérieure est appliquée au moyen d'un procédé de coulée continue, d'un procédé de placage ou d'un procédé de pulvérisation.

11. Echangeur thermique comprenant au moins un composant, particulièrement un composant véhiculant l'agent réfrigérant, constitué d'un matériau composite selon l'une quelconque des revendications 1 à 6.
